# EUROPÄISCHE PATENTANMELDUNG

(11) **EP 1 128 633 A2**
(43) Veröffentlichungstag der Anmeldung: **29.08.2001**
(21) Anmeldenummer: 01103903.9
(22) Anmeldetag: 17.02.2001
(51) Int. Cl.: H04L 29/06

(54) **Wandler für unterschiedliche Telekommunikationsschnittstellen einer Telekommunikationsanlage**

(30) Priorität: 23.02.2000 DE 10008452
(71) Anmelder: ROBERT BOSCH GMBH, 70442 Stuttgart (DE)
(72) Erfinder: Lechner, Edith, Dr., 65197 Wiesbaden (DE); Heinrich, Hans-Jürgen, Dr., 60528 Frankfurt/Main (DE); Vogel, Uwe, 64347 Griesheim (DE)

(57) **Zusammenfassung**

Die Erfindung betrifft einen Wandler (1) für die Verbindung von zwei, jeweils unterschiedliche Telekommunikationsschnittstellen (4,5) aufweisende Elemente (2,3) einer Telekommunikationsanlage (1), mit einer ersten Wandlerschnittstelle (10,11) für den Anschluss des einen Elements (2,3), einer zweiten Wandlerschnittstelle (10,11) für den Anschluss des zweiten Elements (2,3) und mit einer die beiden Wandlerschnittstellen (10,11) verbindenden Wandlereinheit (12), die für gleiche Ausführungsanforderungen der Elemente (2,3) eine einer Telekommunikationsfunktion zugeordnete Wandlerfunktion (13 bis 16) aufweist, die aus der Wandlereinheit (12) in jeder Wandlungsrichtung in dem der jeweiligen Telekommunikationsschnittstelle (4,5) entsprechenden Ausführungsformat für die Ausführungsanforderung ausgebbar ist.

## Beschreibung

Die Erfindung betrifft einen Wandler für die Verbindung von zwei, jeweils unterschiedliche Telekommunikationsschnittstellen aufweisende Elemente einer Telekommunikationsanlage.

### Stand der Technik

Aus der EP 0 691 056 B1 ist ein Wandler bekannt, der auf einem Transportnetz zu übermittelnde Daten protokollmäßig übersetzt, um diese Daten in ein an den Wandler angeschlossenes lokales Netzwerk übermitteln zu können. Der Wandler übersetzt auch aus dem lokalen Netzwerk anfallende Daten in das auf dem Transportnetzwerk herrschende Protokoll. Hierbei handelt es sich also um eine Übersetzung eines Protokolls eines Datenübertragungsmodells in das Protokoll eines anderen Datenübertragungsmodells. Dabei wird das Kommunikationsprotokoll, also die Konvention, nach der die Kommunikationspartner den Aufbau, die Durchführung und den Abbau einer Übertragungsverbindung verabreden, in das Kommunikationsprotokoll des anderen Datenübertragungsmodells übersetzt. Es handelt sich hierbei um eine reine Codeumsetzung beziehungsweise Datenformatwandlung.

Sollen jedoch Telekommunikationsfunktionen, wie sie beispielsweise in Telekommunikationsanlagen, insbesondere Telefonanlagen, vorgesehen sind, von einem Element zu einem anderen Element der Telekommunikationsanlage gewandelt werden, weil beide Elemente unterschiedliche Telekommunikationsschnittstellen aufweisen, genügt die reine Codewandlung, wie sie oben beschrieben ist, nicht. Insbesondere bei sogenannten CTI-Applikationen (Anwendungen zur Computer-Telefonie-Integration) sind verschiedene, genormte Schnittstellen bekannt, um die CTI-Applikation an eine Telekommunikationsanlage, beispielsweise ein Telekommunikations-Server, anbinden zu können. Die meisten der Schnittstellen entsprechen entweder dem sogenannten CSTA-Standard oder dem weitverbreiteten TAPI-Standard von Microsoft. Diese beiden Schnittstellen sind jedoch untereinander inkompatibel, so dass beispielsweise die eine nach dem CSTA-Standard arbeitende Telekommunikationsschnittstelle der CTI-Applikation nicht an einen Telekommunikations-Server angeschlossen werden kann, dessen Telekommunikationsschnittstelle nach dem TAPI-Standard arbeitet.

### Vorteile der Erfindung

Der mit den Merkmalen des Anspruchs 1 ausgestattete Wandler bietet demgegenüber den Vorteil, dass Elemente einer Telekommunikationsanlage mit unterschiedlichen Telekommunikationsschnittstellen dennoch miteinander verbunden werden können, um Telekommunikation auszuführen. Mit dem erfindungsgemäßen Wandler werden also die eingangs beschriebenen Inkompatibilitäten der unterschiedlichen Telekommunikationsschnittstellen aufgehoben. Der Wandler zeichnet sich insbesondere durch eine Wandlereinheit aus, die eine oder mehrere Wandlerfunktionen besitzt, beispielsweise speichert, wobei einer an beiden Elementen verfügbaren Telekommunikationsfunktion eine Wandlerfunktion zugeordnet ist. Die Telekommunikationsfunktion ist über die Ausführungsanforderung ansprechbar. Jede Wandlerfunktion ist gleichen Ausführungsanforderungen der unterschiedlichen Elemente zugeordnet, wobei jedoch diese Ausführungsanforderung des einen Elements protokollmäßig anders vorliegt als die Ausführungsanforderung des anderen Elements. Die erfindungsgemäße Wandlereinheit ordnet einer an beiden Elementen verfügbaren bestimmten Ausführungsanforderung eine Wandlerfunktion zu. Je nachdem, wie die Wandlungsrichtung erfolgen soll, wird dann die Wandlerfunktion in dem entsprechenden Ausführungsformat aus der Wandlereinheit ausgegeben und an die Wandlerschnittstelle übermittelt, an die das Element der Telekommunikationsanlage angeschlossen ist. Die Wandlerfunktion kann also in dem der Wandlungsrichtung entsprechenden Ausführungsformat für die Ausführungsanforderung ausgegeben werden. Bei Telefonanlagen sind grundsätzlich zwei unterschiedliche Ausführungsanforderungen beziehungsweise Telekommunikationsfunktionen bekannt, nämlich einmal der Aufruf (Service Request) und die Meldung (Event), die in umgekehrter Wandlungsrichtung wie der Aufruf erfolgt. Als Beispiel für einen Aufruf kann beispielsweise ein Telefonanruf von einem Element über die Telekommunikationsanlage zu einem anderen Teilnehmer angenommen werden. Dabei müssen zumindest zwei Parameter für die Ausführungsanforderung berücksichtigt werden, nämlich einmal die Identifizierung des anrufenden Geräts und die Identifizierung des angerufenen Geräts. Ein Aufruf kann jedoch auch eine Aufforderung sein, einen internen (Betriebs-)Zustand der TK-Anlage zu ändern oder abzufragen. Als Beispiel für eine Meldung kann das sogenannte Acknowledgement angesehen werden, das entweder positiv (falls der Aufruf akzeptiert wurde) oder negativ (falls der Aufruf fehlerhaft abgesetzt wurde) sein kann. Die Meldung oder das Ereignis enthält also bei negativem Acknowledgement einen Parameter, beispielsweise einen Fehlercode, der am anrufenden Gerät angezeigt werden kann.

Bei einem bevorzugten Ausführungsbeispiel arbeitet eine der Wandlerschnittstellen und eine der Telekommunikationsschnittstellen nach dem TAPI-Protokoll beziehungsweise -Ausführungsformat. Die andere Wandlerschnittstelle und die andere Telekommunikationsschnittstelle arbeitet hingegen nach dem CSTA-Protokoll beziehungsweise -Ausführungsformat. Diese Telekommunikationsschnittstellen ermöglichen die Anbindung eines Computers an die Telekommunikationsanlage, wobei mit dem Computer somit Telekommunikation möglich ist, also beispielsweise Telefonate oder Telefaxe abgesetzt werden können. Insbesondere ist also vorgesehen, dass eines der Elemente der Telekommunikationsanlage als sogenannte CTI-Applikation (Computer-Telefonie-Integration) ausgebildet ist. Somit kann diese CTI-Applikation eine auch als Client bezeichnete Nebenstelle der Telekommunikationsanlage steuern. Derartige TK-Anlagen werden insbesondere in Call-Centern eingesetzt.

Um die unterschiedlich arbeitenden Telekommunikationsschnittstellen aneinander anzupassen und dem Benutzer die Möglichkeit zu bieten, gewünschte Optionen oder Funktionen einzustellen, insbesondere passend zu diesen Funktionen, die die Kommunikationsanlage und das eine Element bieten, sind in bevorzugter Ausführungsform die Wandlerschnittstellen und/oder die Wandlereinheit programmierbar und/oder konfigurierbar ausgebildet.

Bei einem Ausführungsbeispiel ist vorgesehen, dass eine der Telekommunikationsschnittstellen eine Objekt-Modell-Schnittstelle (Component-Object-Model, im folgenden als COM-Schnittstelle bezeichnet) ist, die zumindest ein Objekt-Modell aufweist, das zumindest eine Methodenschnittstelle besitzt, die die Telekommunikationsfunktion darstellt. Methodenschnittstellen bieten den Vorteil, das eine zentrale Nutzung der zugeordneten Telekommunikationsfunktionen möglich ist, so dass mehrere Benutzer über die Methoden, also die Telekommunikationsfunktionen, verfügen können.

In bevorzugter Ausführungsform ist dann vorgesehen, dass eine der Wandlerschnittstellen eine Objekt-Modell-Schnittstelle ist, die zumindest ein Objekt-Modell besitzt, das zumindest eine Methodenschnittstelle aufweist, die die Telekommunikationsfunktion darstellt. Somit ist die Wandlerschnittstelle leicht mit der Telekommunikationsschnittstelle konfigurierbar. In einer alternativen Ausführungsform kann die Wandlerschnittstelle jedoch auch eine Warteschleife besitzen, so dass die Wandlerschnittstelle auf Ausführungsanforderungen wartet und diese abhandelt.

Ist zumindest eine der Telekommunikationsschnittstellen als COM-Schnittstelle ausgebildet, ist in bevorzugter Ausführungsform vorgesehen, dass die Wandlereinheit die Wandlerfunktion in Abhängigkeit der zugeordneten Ausführungsanforderung dem entsprechenden Objektmodell zuordnet.

Bei einem Ausführungsbeispiel besitzt der Wandler mehrere Wandlerfunktionen. Eine Wandlerfunktion kann auch mehrere Aufrufe bewirken, die jeweils zumindest eine Meldung bewirken können, wobei jeder Meldung wieder eine Wandlerfunktion zugeordnet ist.

Weitere vorteilhafte Ausgestaltungen ergeben, sich aus den Unteransprüchen.

### Zeichnung

Die Erfindung wird nachfolgend anhand von Ausführungsbeispielen mit Bezug auf die Zeichnung näher erläutert. Es zeigen
- Figur 1: ein Blockschaltbild einer Telekommunikationsanlage mit einem Wandler und
- Figur 2: den Wandler nach Figur 1 sowie an den Wandler angeschlossene Telekommunikationsschnittstellen der Telekommunikationsanlage.

### Beschreibung der Ausführungsbeispiele

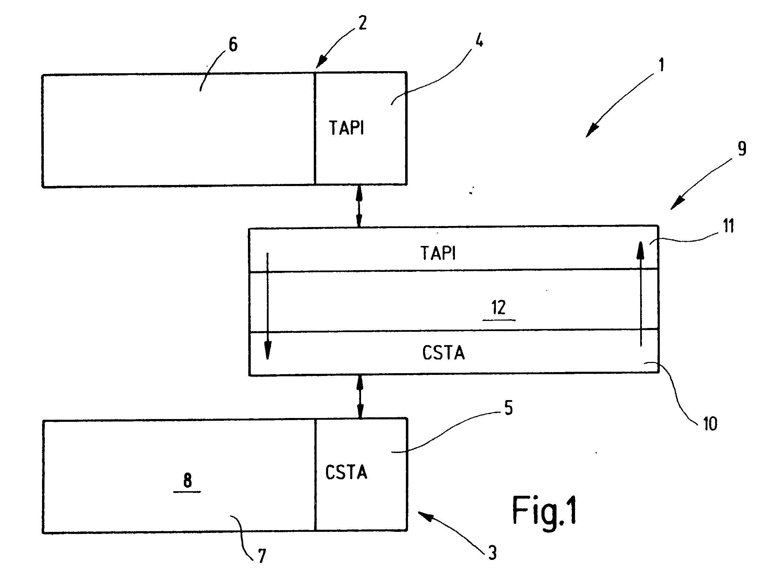

Figur 1 zeigt stark vereinfacht in einem Blockschaltbild eine Telekommunikationsanlage 1, die zwei Elemente 2 und 3 umfasst, wobei jedes Element 2 und 3 jeweils eine Telekommunikationsschnittstelle, im folgenden als TK-Schnittstelle 4, 5 bezeichnet, aufweist. Das Element 2 wird beispielsweise durch eine Zentraleinheit 6 der TK-Anlage 1 gebildet. Die Zentraleinheit 6 kann beispielsweise ein Telekommunikations-Server sein. Das Element 3 bildet in bevorzugter Ausführungsform eine Nebenstelle 7, die von einer CTI-Applikation 8 (Computer-Telefonie-Integration) gesteuert wird. Diese Nebenstelle 7 umfasst einen Computer, mit dem Telekommunikation betrieben werden kann. Hierzu zählen im Zuge dieser Anmeldung zum Beispiel das Vermitteln von Telefonaten, Telefaxen und dergleichen nach Kriterien, die in der CTI-Applikation festgelegt sind. Die CTI-Applikation 8 ist im Computer verfügbar und steuert die Telekommunikation.

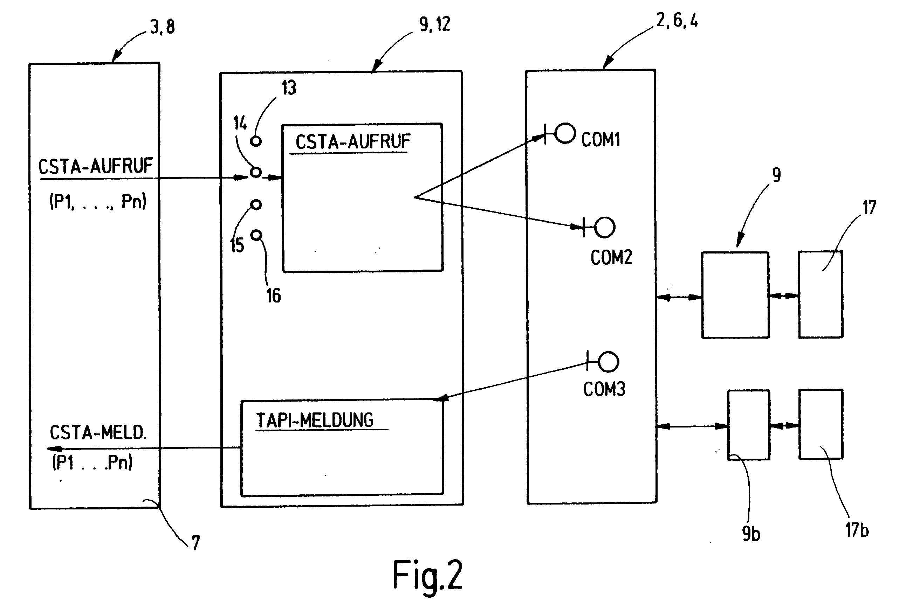

Wie aus Figur 1 ersichtlich, arbeitet die TK-Schnittstelle 4 nach dem TAPI-Protokoll, sie ist also als Programmierschnittstelle ausgebildet. Die TK-Schnittstelle 5 arbeitet nach dem CSTA-Protokoll. Um eine Verbindung der beiden Elemente 2 und 3, das heißt eine funktionierende Kommunikationsstrecke zwischen den beiden unterschiedlichen TK-Schnittstellen 4 und 5 aufbauen zu können, ist ein Wandler 9 zwischengeschaltet, der zwei Wandlerschnittstellen 10 und 11 sowie eine Wandlereinheit 12 umfasst. Die Wandlerschnittstellen 10 und 11 sind programmierbar, so dass sie leicht an die Arbeitsweise beziehungsweise an das Protokoll der TK-Schnittstellen 4 und 5 angepasst werden können. Im Ausführungsbeispiel ist die Wandlerschnittstelle 10 als CSTA-Schnittstelle und die Wandlerschnittstelle 11 als TAPI-Schnittstelle ausgebildet. Um benutzer- und/oder anlagenspezifische Anforderungen erfüllen zu können, also beispielsweise eine Anpassung an Telekommunikationsfunktionen vornehmen zu können, ist die Wandlereinheit 12 ebenfalls programmierbar ausgebildet. Die Wandlereinheit weist -gemäß Figur 2- mehrere, hier vier, Telekommunikationsfunktionen 13 bis 16 auf, wobei insbesondere diese Telekommunikationsfunktionen 13 bis 16 programmierbar sind. Jede Wandlerfunktion 13 bis 16 ist genau einer Ausführungsanforderung, also einer Telekommunikationsfunktion der TK-Schnittstelle 3 zugeordnet.

Im Beispiel nach Figur 2 ist ein CSTA-Aufruf, der auch als CSTA-Service bezeichnet werden kann, abgebildet. Ein Aufruf kann die Anforderung sein, eine Telefonverbindung von einer Nebenstelle 17 zu einer anderen Nebenstelle 17b aufzubauen. Beide Nebenstellen 17 und 17b, die Elemente der TK-Anlage 1 bilden, sind an die Zentraleinheit 6 angeschlossen. Weisen diese Elemente 17, 17b eine andere Telekommunikationsschnittstelle als die Zentraleinheit 6 auf, so sind auch hier Wandler 9 und 9b zwischengeschaltet. Um diese Telekommunikationsfunktion, also den Verbindungsaufbau zwischen Element 17 und Element 17b beziehungsweise zwischen Element 17 oder 17b und der Nebenstelle 7 herstellen zu können, weist der CSTA-Aufruf mehrere Parameter P₁ bis Pₙ auf, wobei für eine Telefonverbindung zumindest eine Identifikation des anrufenden Elements 17b oder 7 und die Identifikation des anzurufenden Elements 17 im CSTA-Aufruf als Parameter P₁ bis Pₙ enthalten sein müssen. Entsprechend dem vom Element 3 abgesetzten CSTA-Aufruf ermittelt die Wandlereinheit 12 die zugehörige Wandlerfunktion 14, die dem CSTA-Aufruf eindeutig zugeordnet ist. Durch Verarbeitung der Parameter P₁ bis Pₙ des CSTA-Aufrufs wird die Wandlerfunktion 14 in der Wandlungsrichtung zum Element 2 hin entsprechend der verwendeten Telekommunikationsschnittstelle 4 in dem entsprechenden Ausführungsformat ausgegeben. Ist die TK-Schnittstelle 4 als Objekt-Modell-Schnittstelle ausgebildet, die mehrere Objekt-Modelle COM 1, COM 2, besitzt, wobei jedes Modell COM 1 und COM 2 zumindest eine Methodenschnittstelle aufweist, die eine Telekommunikationsfunktion darstellt, so wird aus der Wandlereinheit 12 der entsprechende CSTA-Aufruf - wie vorstehend erwähnt- in dem Ausführungsformat ausgegeben, das der TK-Schnittstelle 4 entspricht und zumindest einem bestimmten Objektmodell COM 1 beziehungsweise COM 2 zugeordnet. Aus der Zentraleinheit 6, die eine Verbindung zu einem öffentlichen Telekommunikationsnetz aufweisen kann, werden dann die anzurufenden Elemente 17 und/oder 17b ermittelt und der Verbindungsaufbauwunsch an diese Elemente 17 und/oder 17b abgesetzt, so dass die Telefonverbindung hergestellt werden kann. Im vorliegenden Ausführungsbeispiel besteht die Aufgabe der Wandlereinheit 12 also darin, einen CSTA-Aufruf und die zugehörigen Parameter P₁ bis Pₙ bestimmten COM-Objekten COM 1 beziehungsweise COM 2 und ihren Methoden zuzuordnen. Dabei kann ein CSTA-Aufruf auch mehrere COM-Methodenaufrufe bewirken. Ein Methodenaufruf kann jedoch auch mehrere CSTA-Aufrufe bewirken.

Eine weitere Aufgabe der Wandlereinheit besteht darin, die Wandlung auch in der umgekehrten Wandlungsrichtung durchzuführen. Beispielsweise benötigt die nach dem CSTA-Protokoll arbeitende TK-Schnittstelle 3 eine Antwort der Zentraleinheit 6, ob der gewünschte CSTA-Aufruf auch ausgeführt werden kann. Um die notwendige Frage für diese Antwort abzusetzen, kann ein weiterer CSTA-Aufruf ausgegeben werden, der dann entsprechend einer der Wandlerfunktionen 13 bis 16 als CSTA-Aufruf, jedoch im Ausführungsformat für die TAPI-Schnittstelle, an das Element 2 abgesetzt wird, und zwar an das richtige Objektmodell, beispielsweise COM 2.

Auf diese Frage, ob die Telefonverbindung richtig ausgeführt werden kann, erwartet die TK-Schnittstelle 3 eine entsprechende Antwort, die auch als Acknowledgement bezeichnet wird. Diese wird von einem weiteren Objekt-Modell COM 3 im TA-PI-Format an den Wandler 9 als TAPI-Meldung abgegeben. Der Wandler 9 setzt diese TAPI-Meldung entsprechend einer Telekommunikationsfunktion mittels einer der Wandlerfunktionen 14 bis 16 eindeutig in die zugehörige CSTA-Meldung mit den zugehörigen Parametern P₁ bis Pₙ um, so dass diese an der TK-Schnittstelle 3 richtig erkannt und verarbeitet werden kann.

Die CTI-Applikation 8, die dem Element 3 entspricht, setzt also einen bestimmten CSTA-Service-Request ab, der eine bestimmte Anzahl von Parametern P₁ bis Pₙ umfasst. Der Wandler 9 bietet mit seiner Wandlereinheit 12 eine Schnittstelle mit genau einer Funktion 13 bis 16 pro möglichem CSTA-Aufruf, wobei diese Wandlerfunktion 13 bis 16 entsprechend der Wandlungsrichtung im zugehörigen richtigen Ausgabeformat beziehungsweise Ausführungsformat ausgegeben werden kann. Die Wandlereinheit 12, die diese Schnittstelle bildet, kann auf verschiedene Arten realisiert sein. Hierzu gehören beispielsweise die Ausbildung als RPC-Schnittstelle (Remote Procedure Call), CORBA-Schnittstelle (Common Object Request Broker Architecture) oder auch, wie bei der TAPI-Schnittstelle 4, als COM-Schnittstelle, die mehrere Objektmodelle aufweist.

Es zeigt sich also, dass die Wandlereinheit 12 die Wandlerfunktion 13 bis 16, gegebenenfalls unter Zuhilfenahme der von dem CSTA-Aufruf mitgelieferten Parameter P₁ bis Pₙ, die relevanten COM-Objekte COM 1 beziehungsweise COM 2 der TAPI-Schnittstelle ermittelt, um die Wandlerfunktionen 13 bis 16 im entsprechenden Protokoll an die zugehörigen Objekte zu übergeben. Des Weiteren ermittelt die Wandlereinheit 12 die in den COM-Objekten COM 1 und COM 2 enthaltenen Methoden, die Telekommunikationsfunktionen entsprechen, die dort aufgerufen werden. Außerdem werden die Parameter P₁ bis Pₙ ermittelt, die man diesen Methoden mitgeben muss, um den CSTA-Aufruf korrekt ausführen zu können. Nachdem die COM-Objekte sowie die Methoden ermittelt sind, setzt die Wandlereinheit 12 den entsprechenden CSTA-Aufruf ab.

In umgekehrter Wandlungsrichtung, im vorliegenden Ausführungsbeispiel soll die auf den CSTA-Aufruf erfolgende Antwort übermittelt werden, "verschickt" die TAPI-Schnittstelle 4 diese Antwort, die auch als Meldung oder Event bezeichnet wird, an den Wandler 9. Da dieser -wie vorstehend erwähnt- auch eine COM-Schnittstelle aufweisen kann, wird das entsprechende COM-Objekt in der Wandlereinheit 12 ermittelt. Die Wandlereinheit 12 bestimmt darauf die der TAPI-Meldung entsprechende Telekommunikationsfunktion beziehungsweise Wandlerfunktion 13 bis 16 und gibt diese in Wandlungsrichtung als CSTA-Meldung mit den Parametern P₁ bis Pₙ aus.

Anstelle einer COM-Schnittstelle kann der Wandler beziehungsweise die Wandlereinheit 12 auch eine Warteschleife (Windows Message Loop) aufweisen, die auf Meldungen wartet und diese dann abhandelt. An der Art der Meldung beziehungsweise des Events und an den von der TAPI-Schnittstelle 4 mitgegebenen Parametern muss die Wandlereinheit 12 den entsprechenden CSTA-Event erkennen, der aus einer der Wandlerfunktionen 13 bis 16 zu generieren und an die CTI-Applikation 8 zu schicken ist.

Der Wandler 9 wird also zwischen der Zentraleinheit 6 und einer CTI-Applikation 8 eingesetzt, der die Protokollmeldungen von CSTA nach TAPI wandelt und umgekehrt. Da CSTA und TAPI vom Funktionsumfang her möglicherweise nicht vollständig übereinstimmen, kann es bei der Wandlung Leistungseinschränkungen geben. Gegebenenfalls kann der Wandler 9 bei TAPI oder CSTA fehlende Funktionen jedoch auch selbständig emulieren, so dass diese Leistungseinschränkungen im wesentlichen aufgehoben sind. Grundsätzlich werden jedoch mit dem Wandler 9 Inkompatibilitäten zwischen unterschiedlichen TelekommunikationsSchnittstellen 3 und 4 aufgehoben.

Es gibt mehrere Möglichkeiten, den Wandler 9 zu realisieren, abhängig davon, welche Art der TK-Schnittstelle 3 beziehungsweise 4 die TK-Anlage und CTI-Applikation 8 nach außen zur Verfügung stellen, etwa sogenannte Socket-Schnittstellen oder die vorstehend erwähnten RPC-Schnittstellen. Grundsätzlich kann der Wandler 9 alle üblichen beziehungsweise bekannten Telekommunikations-Schnittstellenarten realisieren und dem Benutzer dann die Möglichkeit bieten, die gewünschte Schnittstellenart einzustellen beziehungsweise zu programmieren und entsprechend zu konfigurieren. Insbesondere ist es dann von Vorteil, wenn der Wandler 9 zusammen der Wandlereinheit 12 als Softwarekomponente bereitgestellt wird, die auf jeder CTI-Applikation 8 installiert werden kann.

## Patentansprüche

1. Wandler (1) für die Verbindung von zwei, jeweils unterschiedliche Telekommunikationsschnittstellen (4,5) aufweisende Elemente (2,3) einer Telekommunikationsanlage (1), mit einer ersten Wandlerschnittstelle (10,11) für den Anschluss des einen Elements (2,3), einer zweiten Wandlerschnittstelle (10,11) für den Anschluss des zweiten Elements (2,3) und mit einer die beiden Wandlerschnittstellen (10,11) verbindenden Wandlereinheit (12), die für gleiche Ausführungsanforderungen der Elemente (2,3) eine einer Telekommunikationsfunktion zugeordnete Wandlerfunktion (13 bis 16) aufweist, die aus der Wandlereinheit (12) in jeder Wandlungsrichtung in dem der jeweiligen Telekommunikationsschnittstelle (4,5) entsprechenden Ausführungsformat für die Ausführungsanforderung ausgebbar ist.

2. Wandler nach Anspruch 1, **dadurch gekennzeichnet,** dass eine der Wandlerschnittstellen (10,11) und eine der Telekommunikationsschnittstellen (4,5) nach dem TAPI- und die andere Wandlerschnittstelle (10,11) und die andere Telekommunikationsschnittstelle (4,5) nach dem CSTA-Ausführungsformat arbeiten.

3. Wandler nach einem der vorhergehenden Ansprüche, **dadurch gekennzeichnet,** dass eines der Elemente (2,3) eine Zentraleinheit (6) und das andere Element (2,3) eine Nebenstelle (7,17,17b) der Telekommunikationsanlage (1) sind.

4. Wandler nach einem der vorhergehenden Ansprüche, **dadurch gekennzeichnet,** dass die Nebenstelle (7,17,17b) von einer CTI-Applikation (8) gesteuert ist.

5. Wandler nach einem der vorhergehenden Ansprüche, **dadurch gekennzeichnet,** dass die Wandlerschnittstellen (10,11) und/oder die Wandlereinheit (12) programmierbar und/oder konfigurierbar ausgebildet ist.

6. Wandler nach einem der vorhergehenden Ansprüche, **dadurch gekennzeichnet,** dass eine der Telekommunikationsschnittstellen (4,5) eine Objekt-Modell-Schnittstelle ist, die zumindest ein Objekt-Modell (COM 1, COM 2) aufweist, das zumindest eine Methodenschnittstelle besitzt, die die Telekommunikationsfunktion darstellt.

7. Wandler nach einem der vorhergehenden Ansprüche, **dadurch gekennzeichnet,** dass die Wandlerschnittstelle (10,11) eine Objekt-Modell-Schnittstelle ist, die zumindest ein Objekt-Modell (COM 1, COM 2) besitzt, das zumindest eine Methodenschnittstelle aufweist, die die Telekommunikationsfunktion darstellt.

8. Wandler nach einem der Ansprüche 1 bis 6, **gekennzeichnet durch,** eine Warteschleife.

9. Wandler nach einem der vorhergehenden Ansprüche, **dadurch gekennzeichnet,** dass die Wandlereinheit (12) die Wandlerfunktion (13 bis 16) in Abhängigkeit der zugeordneten Ausführungsanforderung dem entsprechenden Objektmodell (COM 1, COM 2) zuordnet.

10. Wandler nach einem der vorhergehenden Ansprüche, **gekennzeichnet durch** mehrere Wandlerfunktionen (13 bis 16), wobei jeweils eine der Wandlerfunktionen (13 bis 16) jeweils zumindest einem Aufruf und zumindest einer Meldung zugeordnet ist.
